Europäisches Patentamt

European Patent Office

Office européen des brevets

(11) Veröffentlichungsnummer: **0 130 448**
**B1**

(12) # EUROPÄISCHE PATENTSCHRIFT

(45) Veröffentlichungstag der Patentschrift:
**06.12.89**

(21) Anmeldenummer: **84106909.9**

(22) Anmeldetag: **16.06.84**

(51) Int. Cl.⁴: **G 01 L 19/06,** G 01 L 9/12,
G 01 L 9/08, G 01 L 11/00,
G 01 L 21/00

(54) **Verfahren und Vorrichtung zum Schutz von Messzellen und anderen empfindlichen Bauelementen vor Verschmutzung und Korrosion.**

(30) Priorität: **29.06.83 DD 252515**
**29.06.83 DD 252516**
**29.06.83 DD 252517**

(43) Veröffentlichungstag der Anmeldung:
**09.01.85 Patentblatt 85/2**

(45) Bekanntmachung des Hinweises auf die Patenterteilung:
**06.12.89 Patentblatt 89/49**

(84) Benannte Vertragsstaaten:
**DE**

(56) Entgegenhaltungen:
**CH-A-598 587**
**FR-A-2 354 548**

(73) Patentinhaber: **VEB Hochvakuum Dresden,
Niedersedlitzer Strasse 63, DDR- 8017 Dresden
(DD)**

(72) Erfinder: **Schiess, Wolfgang, Hohe Strasse 12b,
DDR- 8010 Dresden (DD)**
Erfinder: **Thorandt, Herbert, Lenigrader Strasse
30/1001, DDR- 8010 Dresden (DD)**

(74) Vertreter: **Patentanwälte Beetz sen. - Beetz jun.
Timpe - Siegfried - Schmitt- Fumian,
Steinsdorfstrasse 10, D-8000 München 22 (DE)**

EP 0 130 448 B1

## Beschreibung

### Anwendungsgebiet der Erfindung

Die Erfindung betrifft ein Verfahren und eine Vorrichtung, mit denen bei Apparaturen der Druck- und Vakuummeßtechnik das Vordringen aggressiver oder kondensierbarer Gase bzw. Dämpfe in das Innere der angeschlossenen Bauelemente verhindert wird und im gasförmigen Meßmedium enthaltene Schmutzteilchen zurückgehalten werden, ohne daß dadurch die Funktion, wie z. B. die Meßgenauigkeit oder der Meßbereich der angeschlossenen Bauelemente/Meßzellen eingeengt wird.

### Charakteristik der bekannten technischen Lösungen

In der Manometrie ist es bekannt (Franz X. Eder, Moderne Meßmethoden der Physik, Deutscher Verlag der Wissenschaften, Berlin 1952; Wutz, Theorie und Praxis der Vakuumtechnik, Vieweg Verlag, 1965), mittels durchflußgeregelter Drosseln einen konstanten Schutzgasstrom in die Meßleitungen einströmen zu lassen, um das Vordringen agressiver oder verschmutzter Gase und Dämpfe in das Meßglied zu vermeiden. Das Spülen von Meßleitungen zum Schutz gegen aggressive Medien und gegen Verunreinigungen erfordert jedoch eine ständige Zufuhr von Schutzgas und führt, vor allen Dingen bei kleinen Drücken, zu Meßfehlern.

Des weiteren ist zum Schutz von Membran-Vakuummeßgeräten ein Spülgasflansch bekannt, bei dem über eine feine Düse ein Schutzgasstrom von etwa 200 Pa l/s so in den zwischen Meßgerät und Rezipienten geschalteten Flansch strömt, daß der in Richtung zum Rezipienten strömende Schutzgasstrom groß ist gegenüber dem in umgekehrter Richtung auftretenden Diffusionsstrom unerwünschter Dämpfe.

Die Anwendung eines Spülgasflansches im Grobvakuumbereich besitzt jedoch den Nachteil, daß neben dem Schutzgas ein höheres Saugvermögen der Vakuumpumpe, z. B. um etwa 5 m³h⁻¹ beim Abpumpen bis ca 100 Pa erforderlich ist. Außerdem ist ein Schutz nur bis etwa 40 kPa Absolutdruck wirksam, darüber hinaus muß das Gerät durch ein zusätzliches Ventil von der Apparatur abgesperrt werden. Zum Schutz von Vakuummeßzellen vor schädlichen kondensierbaren Gasen und Dämpfen ist auch die Zwischenschaltung einer mit flüssigem Stickstoff gefüllten Tiefkühlfalle (Ausfriertasche, Baffle) bekannte. Vor Kompressions-Vakuummeßgeräten eingesetzte Tiefkühlfallen sollen zusätzlich das Eindringen von Quecksilberdampf aus dem Meßgerät selbst in den Rezipienten verhindern.

Beim Einsatz von Tiefkühlfallen sind aber neben der notwendigen ständigen Überwachung und Nachfüllung mit dem teuren flüssigen Stickstoff zusätzliche Meßfehler einzukalkulieren, da nur der Anteil der nicht kondensierbaren Gase und Dämpfe aus dem Meßmedium gemessen wird. Beim Einsatz des Kompressions-Vakuummeßgerätes wird bei niedrigen Absolutdrücken zusätzlich ein bis zu 40 % zu kleiner wert gemessen, weil der aus der Meßflüssigkeit austretende und in die Kühlfalle strömende Quecksilberdampf einen Teil der Gasmoleküle aus dem Rezipienten zurückschlägt, und sie so der Messung entgehen.

Die Diffusion von Treibmitteldämpfen in die mechanische Vorvakuumpumpe bei Diffusionspumpen der Hochvakuumtechnik wird auch dadurch zu vermindern versucht, indem man z. T. Kühlstrecken oder Kühlfallen mit Wasserkühlung zwischenschaltet. Das hat sich aber beispielsweise an Pumpständen für die Evakuierung von Bildröhrenkolben als nicht ausreichend wirksam erwiesen.

Bekannt ist auch, daß das Eindringen von mechanischen Verunreinigungen in Meßzellen, beispielsweise beim Einströmen atmosphärischer Luft, allgemein durch Filter aus engmaschigen Metallsieben, aus gesinterten Porenfilter (Bronze oder Glas) oder Filz verringert werden soll. Wohingegen zum Schutz gegen Bedampfung an den Kaltkathoden-Vakuummeßzellen Prallplatten eingesetzt werden, die die geradlinige Ausbreitung der Dampfpartikel verhindern und sie vor Verunreinigungen schützen sollen.

Die Porenfilter können jedoch nur grobe Verunreinigungen von der Meßzelle fernhalten und bei längerem Einsatz müssen sie gewechselt oder gereinigt werden, weil sonst die Messung durch zu starke Drosselung des Leitungsquerschnittes verfälscht wird.

Ebebnso sind Prallplatten als Bedampfungsschutz nur sehr begrenzt wirksam, zumal sie die Notwendigkeit einer häufigen Reinigung von Kaltkathoden-Vakuummeßzellen nicht verringert haben.

### Ziel der Erfindung

Das Ziel der Erfindung besteht darin, empfindliche Bauelemente und Meßzellen vor schädigenden Gasunreinheiten zu schützen, die Lebensdauer zu verlängern sowie die Wartungsintervalle zu vergrößern bzw. die Wartungsarbeiten zu vermeiden.

### Darlegung des Wesens der Erfindung

Der Erfindung liegt die Aufgabe zugrunde, ein Verfahren und eine Vorrichtung zu schaffen, mit denen ein Wirksamer Schutz empfindlicher Druckmeßzellen gegen Verschmutzung, den Angriff aggressiver Gase und Dämpfe oder das Kondensieren kondensierbarer Anteile erreicht werden soll und die die kontinuierliche Messung von Gasdrücken und die sichere Anzeige des Gasdruckes über einen großen Meßbereich nicht beeinträchtigen.

Erfindungsgemäß wird diese Aufgabe durch Verfahren und Vorrichtungen gemäß den Patentansprüchen gelöst.

Es wurde gefunden, daß ein niederfrequent schwingender Membran-Körper durch seine Bewegungsenergie direkt auftreffende Schmutzteilchen und Gas- oder Dampfmoleküle zur Änderung der ursprünglichen Bewegungsrichtung zwingt. Dazu wird der schwingungsfähige Membran-Körper über einen elektrischen oder elektromechanischen Antrieb in periodische niederfrequente Schwingungen von beispielsweise Netzfrequenz versetzt. Dabei entsteht ein in der Regel sinusförmiger Wechseldruck, der sich dem in der Apparatur herrschenden Gasdruck überlagert. Durch die periodische Bewegung des Membran-Körpers, des sogenannten Wechseldruckgebers, wird auf Schmutzteilchen, die im Meßmedium auf die Meßzelle zu strömen, eine kinetische Energie übertragen, die diese Teilchen in die entgegengesetzte Richtung beschleunigt, womit das Vordringen in die empfindliche Meßzelle verhindert wird.

Durch die Bewegung des schwingungsfähigen Membran-Körpers entsteht kurzzeitig eine Kompression des Gasvolumens in der Umgebung und damit ein wechselnder Druck

$$p = \frac{D V}{V} \cdot p \qquad \text{absolut}$$

Dieser Druck ist im Bereich höherer Gasdichte sowohl bei Überdruck als auch im Grobvakuum identisch mit dem Schalldruck. Durch den periodischen, kurz zeitigen Druckwechsel wird eine bevorzugte Bewegung der Gasteilchen in Richtung von dem zu schützenden Bauelement weg hervorgerufen, die größer ist als der in umgekehrter Richtung auftretende Diffusionsstrom der unerwünschten Dämpfe.

Die angelegte Wechselspannung von vorzugsweise Netzfrequenz oder einer anderen, wegen der Empfindlichkeit des menschlichen Ohres zweckmäßigerweise von 1 kHz weit entfernten Niederfrequenz, muß so bemessen sein, daß der entstehende Schalldruckpegel mindestens 100 dB bei Atmosphärendruck im Rohrinneren beträgt. Damit ist auch bei niedrigem Absolutdruck in Vakuumanlagen eine ausreichende Schutzwirkung vorhanden, da der entstehende Schalldruckpegel direkt von der Größe des Absolutdruckes abhängt.

Die Vorrichtung zur Durchführung des erfindungsgemäßen Verfahrens ist einsetzbar als eigenständige Baueinheit, wie sie auch in Meßzellen, insbesondere Modulationsmeßzellen, integrierbar ist. Dabei wird sie Bestandteil der Meßzelle und übernimmt gleichzeitig wichtige Funktionen derselben.

Beim Einbau der Vorrichtung in derartige Meßzellen ist die in der Meßzelle vorhandene Metallmembran (im weiteren Gebermembran) im Abstand von mehreren mm zur Metallmembran der Vorrichtung, ebenfalls in ihrer Lage durch den Zentrierring fixiert, angeordnet, wobei beide Metallmembranen frei beweglich eingespannt sind und auf den sich zugewandten Seiten je ein elektromechanisches Antriebssystem tragen.

Die Metallmembran der Vorrichtung ist dabei so angeordnet, daß sie einen in Amplitude und Phasenlage entgegengesetzten Rückstoß auf das Empfängermikrofon der Meßzelle ausübt, wobei der dabei erzeugte Wechseldruck in seiner Wirkung auf den Empfänger vernachlässigbar klein ist. Die Metallmembran der Vorrichtung wirkt demzufolge als Kompensator. Die Wechselspannung für den Betrieb beider Membranen wird dabei dem gleichen Generator entnommen und in gleicher Größe jeder Meßzelle zugeführt.

Der Befestigungsring, der im Zusammenwirken mit dem Zentrierring die Gebermembran in ihrer Lage hält, ist mit dem Membranring des Empfängermikrofons der Meßzelle durch eine elastische Klebeverbindung schwingungsgedämpft verbunden.

Die Vorteile der vorgeschlagenen Lösung liegen neben der Vereinfachung im Aufbau, der Verringerung des apparativen Aufwandes vor allem darin, daß durch den identischen Aufbau beider Membranen die gleiche Temperaturabhängigkeit gegeben ist, beide Membranen stets mit gleicher Frequenz schwingen. Durch einmalige Einstellung mittels je eines Spannungsteilers wird die Empfindlichkeit des Gebersystems an einem Punkt innerhalb des linearen Meßbereiches, und die Amplitude des Kompensators am Meßbereichsende eingestellt. Die Einstellung für den Kompensator wird so gewählt, daß die am Mikrofon praktisch auftretende Rückstoßamplitude kompensiert wird, so daß die Rückstoßkompensation ohne zusätzliche Mikrofone bzw. elektrische Regelungen erreicht wurde, daß die Modulationskammer vor Verunreinigungen geschützt ist und daß die Austauschbarkeit der Meßzellen gewährleistet ist.

Die Vorrichtung ist einsetzbar sowohl im Druckbereich oberhalb des Atmosphärendrucks wie auch im Vakuum bis zu Absolutdrücken < 10 Pa.

Bei der Anwendung der Erfindung zum Schutz von Vakuummeßzellen, deren Wirkprinzipien die Auswertung von Wechselgrößen erfordert, wie beispielsweise Reibungs- oder verschiedene Wärmeleitungsvakuummeßgeräte, ist es in der Regel erforderlich, für den Antrieb der erfindungsgemäßen Einrichtung eine von den genannten Geräten angewendete Schwing- oder Auswertefrequenz deutlich abweichende Antriebsfrequenz zu wählen.

**Ausführungsbeispiel**

Die Erfindung soll nachstehend anhand von zwei Ausführungs beispielen näher erläutert werden. Die zugehörige Zeichnung zeigt dabei in

Fig. 1: die Schnittdarstellung einer erfindungsgemäßen Vorrichtung als Separates Bauteil,

Fig. 2: die Schnittdarstellung einer in eine Meßzelle integrierten erfindungsgemäßen Vorrichtung.

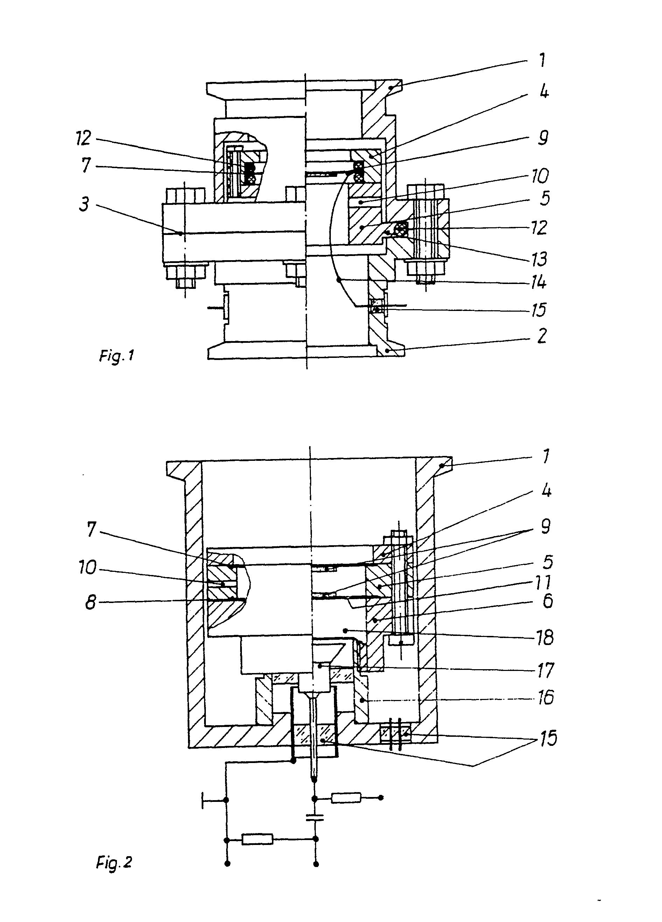

Fig. 1 zeigt ein zweiteiliges, aus einem Vakuumflansch 1 und einem Meßzellenflansch 2 bestehendes Gehäuse 3, in dem im geringen Abstand zur Innenwandung und in einer Ausdrehung des Vakuumflansches 1 ein Spannring 4 angeordnet ist. Dieser Spannring 4 besitzt ebenfalls eine zylindrische Ausdrehung, in welcher der aus Metallmembran 7 und leitend aufgeklebter Piezokeramikscheibe 9 bestehende Wechseldruckgeber zwischen Rundringen 12 elastisch eingespannt ist. Durch den Zentrierring 5 werden die Rundringe 12 in der Ausdrehung des Spannringes 4 fixiert, wobei der Spannring 4 mit dem Zentrierring 5 durch Zylinderkopfschrauben verbunden ist.

Der Zentrierring 5 besitzt an seinem Außendurchmesser einen Bund 13, auf dem sich ein Rundring 12 befindet, der mit dem Bund 13 zwischen die Gehäusehälften 1, 2 geklemmt wird, wodurch das gesamte System in seiner Lage gehalten wird.

Des weiteren besitzt der Zentrierring 5 Umwegbohrungen 10, die für den statischen Druckausgleich des Systems sorgen. Die am Wechseldruckgeber 7, 9 befindlichen flexiblen elektrischen Zuleitungen 14 führen über im Meßzellenflansch 2 angeordnete vakuumdichte Drückglasdurchführung 15 nach außen zur Anlegung der Wechselspannung, die im dargelegten Ausführungsbeispiel 10 ... 15 V bei einer Frequenz von 50 ... 400 Hz beträgt.

Bei dem in Fig. 2 dargestellten Ausführungsbeispiel besteht das Gehäuse 3 nur aus dem Vakuumflansch 1 in ihm ist, ebenfalls im geringen Abstand zum Innendurchmesser des Vakuumflansches 1 der Spannring 4 zu erkennen, an dessen der Meßzelle zugewandter Stirnfläche die Metallmembran 7 mit der leitend aufgeklebten Piezokeramikscheibe 9 anliegt.

In ihrer Lage fixiert wird die Metallmembran 7 wie auch die Metallmembran 8 des Wechseldruckgebers der Meßzelle durch im Zentrierring 5 angebrachte stirnseitige Ausdrehungen. Die Abdichtung der Metallmembranen 7; 8 erfolgt durch ihre Lagerung in einem dünnen Silikonfettfilm. Die Metallmembran 8 des Gebers wird des weiteren durch den Befestigungsring 6 in der Ausdrehung des Zentrierringes 5 fixiert.

Spannring 4, Zentrierring 5 und Befestigungsring 6 werden durch Schrauben zusammengehalten. Der Befestigungsring 6 ist seinerseits am Membranring 16 des Kondensatormikrofons 17 durch eine elastische Klebeverbindung befestigt. Das Gehäuse des Kondensatormikrofons 17 selbst ist am Boden des Vakuumflansches 1 angeordnet, wie auch die vakuumdichten Druckglasdurchführungen 15, über die die flexiblen elektrischen Zuleitungen 14 für den Antrieb der Metallmembranen 7; 8 nach innen führen sowie auch die Zuleitungen für den Anschluß der elektronischen Anzeigeeinheit für die Anzeige des zu messenden Druckes.

Im Zentrierring 5 ist die Umwegbohrung 10 angebracht. Die Ausgleichsbohrung 11 sorgt für die Herstellung des ständigen statischen Druckausgleiches in der von der Gebermembran 8, dem Befestigungsring 6 und der Membran des Kondensatormikrofons 17 gebildeten Modulationskammer 18 mit dem zu messendem Gasdruck. Die im Ausführungsbeispiel in der Gebermembran 8 angeordnete Ausgleichsöffnung 11 kann ebenso als beliebig geformte Ausgleichsöffnung kleinen Querschnitts in die Modulationskammer 18 führen.

Die Wirkungsweise der Vorrichtung ist dabei folgende:

Durch die niederfrequente Wechselspannung entstehen an den Piezokeramikscheiben 9 periodische Längenänderungen, die über die Verklebungen mit den beweglich gelagerten Membranen 7; 8 zu deren Auslenkung führen. Dabei erzeugt die Gebermembran 8 eine relativ hohe periodische Volumenänderung in der Modulationskammer 18 und damit einen Wechseldruck, der sich sinusförmig dem Absolutdruck überlagert. Der vom Kondensatormikrofon 17 empfangene Wechseldruck ist direkt vom Absolutdruck in der Vakuumapparatur abhängig. Somit ist die an der elektronischen Anzeigeeinheit abgenommene Wechselspannung ein Maß für den zu ermittelnden Absolutdruck.

Die Metallmembran 7 erzeugt zwar ebenfalls einen Wechseldruck, dessen Wirkung auf den Druck in der Modulationskammer 18 und damit auf das Kondensatormikrofon 17 ist aber vernachlässigbar klein, weil er auf ein wesentlich größeres Volumen wirkt.

Gleichzeitig erzeugen sowohl Gebermembran 8 wie auch die Metallmembran 7 einen Rückstoß, der ohne entsprechende Gegenmaßnahmen als unerwünschter Körperschall auf das empfindliche Kondensatormikrofon 17 wirken und bei niedrigem Absolutdruck eine größere Wechselspannung hervorrufen würde als der gewünschte Wechseldruck in der Modulationskammer 18.

Da beide Membranen 7; 8 identisch sind, gleiche Temperaturabhängigkeit besitzen und so eingebaut und angeregt werden, daß der Rückstoß in entgegengesetzter Richtung wirkt, kann die Größe des Rückstoßes an der Metallmembran 7 bei kleinem Absolutdruck (z. B. 1 Pa) am Meßbereichsende durch Einstellung der angelegten niederfrequenten Wechselspannung so reguliert werden, daß der gleichzeitig wirkende Rückstoß der Gebermembran 8 kompensiert wird.

Damit ist der unerwünschte Einfluß des Rückstoßes auf das Meßergebnis mit einfachen konstruktiven Mitteln beseitigt. Durch die niederfrequente Schwingung der Metallmembran 7 wird demzufolge erreicht, daß den in der Nähe befindlichen Gasmolekülen und im Gas enthaltenen Partikeln eine solche kinetische Energie erteilt wird, daß Verunreinigungen, Öltröpfchen und Dampfpartikel, wie bereits in der Darlegung des Verfahrens beschrieben, zurückgeboxt werden. Ein geradliniges Vordringen von Gasen und Dämpfen mit Verunreinigungen oder korrosiven Bestandteilen in die Meßzellen oder zu schützenden Bauelemente wird in beiden Ausführungsbeispielen durch die Gestaltung der Gasführung über Ringspalt, Umwegbohrungen 10 sowie die Ausgleichsöffnung 11 der Modulationskammer 18 verhindert oder zumindest stark eingeschränkt.

## Patentansprüche

1. Verfahren zum Schutz von Meßzellen und anderen empfindlichen Bauelementen in Druck- und Vakuumapparaturen vor Verschmutzung und Korrosion, *dadurch gekennzeichnet,*

daß zwischen dem zu schützenden Teil und der Apparatur ein Membrankörper mit einem elektrischen oder elektromechanischen Antrieb angeordnet wird,

daß der Membrankörper zum Erzeugen von Druckwechseln in seiner Umgebung unter Versorgung mit Wechselspannung in niederfrequente Schwingungen versetzt wird und

daß die angelegte Wechselspannung so gewählt wird, daß der entstehende Schallpegel bei angeschlossenem zu schützendem Teil am Vakuumflansch mindestens 100 dB bei atmosphärischem Druck im Rohrinneren beträgt.

2. Verfahren nach Anspruch 1 *dadurch gekennzeichnet,*

daß die Antriebsfrequenz zwischen 50 und 400 Hz gewählt wird.

3. Verfahren nach Anspruch 1, *dadurch gekennzeichnet,*

daß für den Schutz von Druck- und Vakuummeßzellen, die eine Wechselspannungsgröße als Maß für den herrschenden Druck nutzen, die Antriebsfrequenz von den verfahrensbedingten Frequenzen verschieden gewählt wird.

4. Verfahren nach einem oder mehreren der Ansprüche 1 - 3 *dadurch gekennzeichnet,*

daß in Anwendung bei einer Modulations-Vakuummeßzelle zusätzlich zu dem ersten Membrankörper ein zweiter Membrankörper mit gleicher Temperaturabhängigkeit vorgesehen wird, daß der zweite Membrankörper in zu den Schwingungen des ersten Membrankörpers gleichfrequente, aber gegenphasige Schwingungen versetzt wird und

daß die für beide Membrankörper gemeinsame Wechselspannung so eingestellt wird, daß sich die Rückstoßwirkungen beider Membrankörper gegenseitig kompensieren.

5. Vorrichtung zum Durchführen des Verfahrens nach einem der Ansprüche 1 - 3, *dadurch gekennzeichnet,*

daß in einem aus einem Vakuumflansch (1) und einem Meßzellenflansch (2) gebildeten Gehäuse (3) in einer Ausdrehung des Vakuumflansches (1) ein Spannring (4) mit einem Zentrierring (5) leicht lösbar verbunden ist,
daß zwischen den beiden Ringen (4 und 5) eine mit einem elektro-mechanischen Antrieb (9) und elektrischen Zuleitungen (14) versehene Metallmembran (7) elastisch eingespannt ist und

daß der Zentrierring (5) Umwegbohrungen (10) und einen Bund (13) mit einem Rundring (12) aufweist, der durch die Gehäuseflansche (1, 2) festgeklemmt ist.

6. Vorrichtung zum Durchführen des Verfahrens nach Anspruch 4, *dadurch gekennzeichnet,*

daß in einem durch einen Vakuumflansch (1) gebildeten Gehäuse zwischen einem Spannring (4), einem mit Umwegbohrungen (10) versehenen Zentrierring (5) und einem Befestigungsring (6) zwei gegenseitig austauschbare Metallmembranen (7 und 8) eingespannt sind, die zur Zuführung einer Wechselspannung gleicher Frequenz mit einem gemeinsamen Generator verbunden sind.

## Claims

1. A method for the protection of measuring cells and other sensitive components in pressure and vacuum apparatus from fouling and corrosion, *characterized* in that

between the part to be protected and the apparatus a diaphragm body with an electric or electromechanical drive is disposed, that in order to produce pressure changes in its environment the diaphragm body is subjected to low frequency oscillations through being supplied with an alternating voltage, and in that the alternating voltage applied is chosen such that the sound level produced when the part to be protected is connected to the vacuum flange amounts to at least 100 dB at atmospheric pressure in the interior of the pipe.

2. The method according to claim 1, *characterized* in that

the driving frequency is chosen between 50 and 400 Hz.

3. The method according to claim 1, *characterized* in that

for the protection of pressure and vacuum measuring cells, making use of an alternating voltage magnitude as a measure for the prevailing pressure, the driving frequency is chosen to be different from the frequencies inherent in the method.

4. The method according to one or several of claims 1 to 3, *characterized* in that

as the same is applied to a modulation vacuum measuring cell, a second diaphragm body in addition to the first diaphragm body exhibiting the same temperature dependency is provided, in that the second diaphragm body is subjected to oscillations of the same frequency as the first diaphragm body yet of opposite phases, and in that the common alternating voltage of the two diaphragm bodies is adjusted so as to allow for mutual compensation of the repulsion effects of the two diaphragm bodies.

5. The method for carrying out the method according to one of claims 1 to 3, *characterized* in that

in a housing (3) formed of a vacuum flange (1) and a measuring cell flange (2) a clamping ring (4) in a groove of the vacuum flange (1) is connected to a centering ring (5) for ready disconnection,

in that between the two rings (4 and 5) a metal diaphragm provided with an electromechanical drive (9) and electrical supply lines (14) is clamped resiliently, and in that

the centering ring (5) comprises by-pass bores (10) and a collar (13) with an annular ring (12) clamped into position by the housing flanges (1, 2).

6. The device for carrying out the method according to claim 4, *characterized* in that

in a housing formed by a vacuum flange (1) two mutually interchangeable metal diaphragms (7 and 8) are clamped between a clamping ring (4), a centering ring (5) and a locking ring (6), with the metal diaphragms connecting to a joint generator for being supplied with an alternating current of the same frequency.

**Revendications**

1. Procédé de protection de cellules de mesure et d'autres éléments sensibles dans des appareillages de pression et de vide contre la pollution et la corrosion, *caractérisé* en ce que

entre la pièce à protéger et l'appareillage est placé un corps de membrane à commande électrique ou électromécanique,

que le corps de membrane est soumis à des oscillations à basse fréquence en l'alimentant avec une tension alternative pour produire des changements de pression dans son environnement, et

que la tension alternative appliquée est choisie de sorte que le niveau sonore se développant, si la pièce à protéger est raccordée, à la bride du vide s'élève à au moins 100 dB dans le cas d'une pression atmosphérique à l'intérieur du tuyau.

2. Procédé selon la revendication 1, *caractérisé* en ce que

la fréquence motrice est choisie entre 50 et 400 Hz.

3. Procédé selon la revendication 1, *caractérisé* en ce que

pour la protection de cellules de mesure de pression et de vide utilisant une valeur de tension alternative pour mesurer la pression existante, la fréquence motrice est choisie différemment des fréquences dues au procédé.

4. Procédé selon une ou plusieurs des revendications 1 à 3, *caractérisé* en ce que

lors de l'utilisation d'une cellule à modulation de mesure du vide, est prévu, outre le premier corps de membrane, un deuxième corps de membrane présentant la même variabilité avec la température,

que le deuxième corps de membrane est soumis à des oscillations de même fréquence, mais de phases opposées par rapport à celles du premier corps de membrane, et

que la tension alternative commune aux deux corps de membrane est réglée de sorte que les effets de recul des deux corps de membrane sont compensés réciproquement.

5. Dispositif pour réaliser le procédé selon une des revendications 1 à 3, *caractérisé* en ce que

dans un boîtier (3) formé par une bride du vide (1) et une bride de cellule de mesure dans un alésage de la bride du vide (1) un anneau tendeur (4) est relié de façon légèrement amovible à un anneau de centrage (5), qu'une membrane métallique (7) munie d'une commande électromécanique (9) et de conduites d'amenée électriques (14) est fixée élastiquement entre les deux anneaux (4 et 5) et

que l'anneau de centrage (5) présente des alésages à by-pass (10) et une collerette (13) avec une bague annulaire (12) fixée par les brides du boîtier (1, 2).

6. Dispositif pour réaliser le procédé selon la revendication 4, *caractérisé* en ce que

dans un boîtier formé par une bride du vide (1) sont fixées, entre un anneau tendeur (4), un anneau de centrage (5) muni d'alésages à by-pass (10) et un anneau de fixation (6), deux membranes métalliques interchangeables, reliées à un générateur commun pour amener une tension alternative de même fréquence.

Fig.1

Fig.2